# FASCICULE DE BREVET EUROPEEN

(11) **EP 1 896 326 B1**
(45) Date de publication et mention de la délivrance du brevet: **28.10.2009**
(21) Numéro de dépôt: 06763903.9
(22) Date de dépôt: 27.06.2006
(51) Int. Cl.: B64D 27/26

(54) **ATTACHE MOTEUR POUR AERONEF DESTINEE A ETRE INTERPOSEE ENTRE UN MOTEUR ET UN MAT D'ACCROCHAGE**
MOTORAUFHÄNGUNG FÜR EIN FLUGZEUG ZUR PLATZIERUNG ZWISCHEN EINEM MOTOR UND EINER MOTORAUFHÄNGUNGSSTRUKTUR
ENGINE MOUNT FOR AN AIRCRAFT, TO BE PLACED BETWEEN AN ENGINE AND AN ENGINE MOUNTING STRUCTURE

(30) Priorité: 29.06.2005 FR 0551821
(43) Date de publication de la demande: 12.03.2008
(73) Titulaire: AIRBUS France, 31060 Toulouse Cédex (FR)
(72) Inventeur: AUDART-NOEL, Virginie, F-32600 Pujaudran (FR); GARDES, Pascal, F-31600 Lherm (FR)
(74) Mandataire: Ilgart, Jean-Christophe
(86) Numéro de dépôt international: PCT/EP2006/063602
(87) Numéro de publication internationale: WO 2007/000458

(56) Documents cités:
- EP-A- 1 129 942
- US-A- 2 818 225
- US-A1- 2002 104 924

## Description

### DOMAINE TECHNIQUE

La présente invention se rapporte de façon générale à une attache moteur pour aéronef destinée à être interposée entré un moteur et un mât d'accrochage également appelé « EMS » (de l'anglais « Engine Mounting Structure »), permettant de suspende le moteur au-dessous de la voilure de l'aéronef, ou bien de monter ce moteur au-dessus de cette même voilure.

L'invention se rapporte également à un ensemble moteur pour aéronef comportant un moteur, un mât d'accrochage ainsi qu'une pluralité d'attaches moteur interposées entre ce mât et le moteur, cet ensemble pouvant être utilisé sur tout type d'aéronef, par exemple du type comportant des turbomoteurs suspendus à sa voilure, tels que des turboréacteurs ou des turbopropulseurs.

### ETAT DE LA TECHNIQUE ANTERIEURE

Sur les aéronefs existants, les turbomoteurs sont suspendus en dessous de la voilure par des dispositifs d'accrochage complexes, également appelés mâts d'accrochage, par l'intermédiaire d'une pluralité d'attaches moteur fixées à ce même mât.

Un tel mât d'accrochage est en effet prévu pour transmettre à la structure de cet aéronef les efforts générés par son moteur associé, et autorise également le cheminement du carburant, des systèmes électriques, hydrauliques, et air entre le moteur et l'aéronef.

Afin d'assurer la transmission de ces efforts, le mât comporte une structure rigide, souvent du type « caisson », c'est-à-dire formée par l'assemblage de longerons supérieurs et inférieurs et de panneaux latéraux raccordés entre eux par l'intermédiaire de nervures transversales.

L'ensemble moteur incorporant le mât et le moteur est donc pourvu d'une pluralité d'attaches moteur interposées entre ce dernier et la structure rigide du mât, cette pluralité d'attaches étant généralement constituée d'une attache avant formant éventuellement deux demi-attaches, d'une attache arrière, ainsi que d'un dispositif de reprise des efforts de poussée générés par le moteur. Dans l'art antérieur, ce dispositif prend par exemple la forme de deux bielles latérales raccordées d'une part à une partie arrière du carter de soufflante du moteur, et d'autre part à l'attache arrière fixée sur le carter central de ce dernier.

A titre indicatif, il est noté que le mât d'accrochage est également associé à un système de montage interposé entre la structure rigide de ce mât et la voilure de l'aéronef, ce système étant habituellement composé de deux ou trois attaches.

Pour la réalisation des attaches moteur, et plus particulièrement celle de l'attache avant et de l'attache arrière, il est habituellement employé une manille raccordée à un dispositif de fixation comportant une chape pourvue de deux bras, un axe traversant la manille ainsi que les deux bras, et deux bagues de réception de l'axe respectivement agencées dans deux orifices prévus sur les deux bras de la chape, qui est par exemple raccordée solidairement sur un carter soufflante du moteur.

Pour assurer le maintien de l'axe précité dans la chape, il est généralement rapporté des moyens de fixation sur chacune des deux extrémités de cet axe, comme montré par EP-1129942 (Fig. 4) et US 2002/0104924 (Fig. 3 et 4).

Si cette solution technique est extrêmement répandue dans le domaine des attaches moteur, elle présente néanmoins un inconvénient majeur résidant dans le fait que l'accessibilité aux extrémités de l'axe devient de plus en plus délicate, notamment en raison de la recherche d'une compacité toujours plus grande pour de tels ensembles moteur. Cet inconvénient se traduit inéluctablement par des difficultés de montage de ces attaches, pénalisantes en termes de coût et de temps. A titre indicatif, ce problème peut notamment être rencontré dans le cadre d'une attache avant où l'extrémité avant des axes traversant la manille peut voir son accessibilité extrêmement réduite par la présence du carter de soufflante du moteur, ce dernier étant en effet situé de façon si proche de cette extrémité d'axe qu'il s'avère pratiquement impossible de manipuler l'outillage requis pour effectuer la fixation de cet axe.

### EXPOSÉ DE L'INVENTION

L'invention a donc pour but de proposer une attache moteur pour aéronef remédiant au problème mentionné ci-dessus rencontré dans les réalisations de l'art antérieur, ainsi qu'un ensemble moteur pour aéronef comprenant au moins une telle attache.

Pour ce faire, l'invention a pour objet une attache moteur pour aéronef destinée à être interposée entre un moteur et un mât d'accrochage de ce moteur, l'attache comprenant une manille raccordée à un premier dispositif de fixation comportant une chape pourvue de deux bras et un axe traversant la manille ainsi que les deux bras, ces deux derniers disposant chacun d'un orifice équipé respectivement d'une première bague ainsi que d'une seconde bague de réception de l'axe. Selon l'invention, la première bague est équipée d'un fond formant butée pour une première extrémité de l'axe, et le premier dispositif de fixation comporte en outre des moyens d'arrêt en translation de l'axe coopérant avec une seconde extrémité de cet axe.

L'invention permet par conséquent de procurer une solution technique dans laquelle il n'est plus nécessaire de prévoir des moyens de fixation spécifiques pour l'une des deux extrémités de l'axe, puisque celle-ci repose donc au fond d'une bague conçue pour l'arrêter en translation. De cette manière, on peut comprendre qu'il est avantageusement possible d'intégrer cette attache moteur dans un environnement dense et peu accessible, voire d'augmenter la compacité de l'ensemble moteur incorporant une telle attache, sans avoir à se soucier des problèmes d'accessibilité dans cette région.

Pour cette attache de conception astucieuse, pouvant indifféremment être prévue pour constituer une attache moteur avant ou une attache moteur arrière, on peut préférentiellement prévoir que les moyens d'arrêt en translation de l'axe sont montés sur la seconde bague, et qu'ils comportent un écrou et un contre-écrou vissés sur cette même seconde bague.

Dans cette configuration, les moyens d'arrêt en translation de l'axe faisant partie intégrante du premier dispositif de fixation peuvent alors également comporter au moins une rondelle-ressort en appui contre l'écrou, ainsi que contre la seconde extrémité de l'axe. Avec un tel agencement, on peut comprendre que l'écrou, de préférence en appui contre un épaulement pratiqué dans la seconde bague, n'est pas directement au contact de la seconde extrémité de l'axe, ce qui permet avantageusement d'éviter les problèmes de serrage trop important susceptible d'entacher la durabilité des bagues. En effet, cette conception particulière permet d'obtenir une force de serrage axiale de l'axe déterminée pour un serrage maximal de l'écrou venant en appui contre son épaulement associé, cette force étant naturellement choisie de manière à être compatible avec le dimensionnement des épaulements prévus sur ces bagues et servant au maintien de celles-ci dans leurs bras de chape respectifs, bien entendu dans un souci d'éviter la mise en cisaillement de ces épaulements de bague.

De préférence, les moyens d'arrêt en translation comportent en outre une tige de sécurité traversant transversalement la seconde bague, cette tige étant agencée au niveau d'une extrémité libre de cette seconde bague de manière à pourvoir retenir l'axe en translation en cas de desserrage / défaillance de l'ensemble écrou / contre-écrou. A titre indicatif, il est précisé que cette tige de sécurité est également appelée tige « Fail Safe ».

Toujours de manière préférentielle, une rotule est interposée entre l'axe et la manille. Cependant, il peut également être envisagé de ne pas prévoir cette rotule et d'obtenir ainsi une liaison classique du type chape / tenon entre la manille et la chape, sans sortir du cadre de l'invention.

De préférence, la manille est triangulaire, et peut être une manille-double. Dans un tel cas, on peut alors prévoir que cette manille triangulaire est également raccordée à un second dispositif de fixation identique au premier dispositif de fixation, ces deux dispositifs de fixation étant respectivement situés à proximité de deux sommets de la manille triangulaire.

Ainsi, la configuration obtenue dans laquelle la manille triangulaire dispose de deux sommets chacun couplé à un axe dont une extrémité est logée dans une bague borgne, est tout à fait adaptée pour permettre à l'attache moteur de former deux demi-attaches chacune conçue de manière à reprendre les efforts s'exerçant selon une direction transversale ainsi que selon une direction verticale du moteur.

Pour ce faire, cette attache moteur peut comporter un troisième dispositif de fixation situé à proximité d'un troisième sommet de la manille triangulaire, ce troisième dispositif de fixation étant alors destiné à être solidarisé au mât d'accrochage tandis que les deux premiers sont quant à eux destinés à être solidarisés au moteur.

L'invention a également pour objet un ensemble pour aéronef comprenant un moteur, un mât d'accrochage ainsi qu'une pluralité d'attaches moteur interposées entre le mât d'accrochage et le moteur. Selon l'invention, la pluralité d'attaches moteur comprend au moins une attache moteur telle que celle décrite ci-dessus et également objet de la présente invention, et de préférence une attache moteur avant telle que celle décrite ci-dessus. Bien entendu, l'ensemble pourrait également comporter une attache moteur arrière conçue de la manière qui vient d'être décrite, sans sortir du cadre de l'invention.

De préférence, la manille est parallèle à la direction transversale du moteur, et inclinée de façon à s'écarter d'un carter de soufflante du moteur en allant vers l'arrière. Cette configuration particulière a été retenue de manière à dégager un écartement longitudinal relativement important entre le carter de soufflante du moteur et la partie supérieure de la manille, et plus globalement la partie supérieure de l'attache avant, dans le but d'éviter les collisions entre ces deux éléments. En effet, il est bien connu que la partie supérieure du carter de soufflante à laquelle est solidarisée cette attache avant a tendance à se déplacer vers l'arrière durant diverses phases de vol, notamment en raison de la flexion longitudinale de ce moteur. A titre indicatif, il est noté que les déplacements mécaniques du moteur ont également pour conséquence de rapprocher le carter de soufflante de l'attache avant, et augmentent par conséquent les risques de collision avec cette attache.

Il doit donc être compris que la disposition inclinée de la manille engendre avantageusement une diminution de ces risques de collision, mais peut conduire à prévoir un écartement longitudinal plus important entre le mât d'accrochage portant cette attache et le carter de soufflante, l'inclinaison de la manille allant bien entendu à l'encontre d'un souci permanent de compacité. Néanmoins, cet éventuel accroissement de l'écartement longitudinal lié à l'inclinaison de la manille peut être largement compensé par la présence des dispositifs de fixation à bague borgne, qui ne nécessitent plus de prévoir une accessibilité entre l'extrémité avant des axes de liaison et le carter de soufflante.

En d'autres termes, cette configuration préférée implique que le carter de soufflante peut être sensiblement rapproché de la partie inférieure de l'attache avant, sans que cela n'engendre de risque de collision entre la partie supérieure du carter et la partie supérieure de l'attache avant située plus en arrière que la partie inférieure de cette même attache.

Enfin, il est préférentiellement prévu que la chape de chacun des deux premiers dispositifs de fixation est montée solidairement sur le moteur, de façon symétrique par rapport à un plan vertical passant par un axe longitudinal de ce moteur.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue de côté partiellement schématique d'un ensemble moteur pour aéronef selon un mode de réalisation préféré de la présente invention ;
- la figure 2 représente une vue de côté agrandie et détaillée de l'attache moteur avant de l'ensemble montré sur la figure 1 ;
- la figure 3 représente une vue en perspective d'une partie de l'attache moteur avant montrée sur la figure 2 ;
- la figure 4 représente une vue en coupe d'une partie de l'attache moteur avant montrée sur les figures 2 et 3 ; et
- la figure 5 représente une vue en perspective d'un ensemble moteur pour aéronef selon un autre mode de réalisation préféré de la présente invention (le moteur n'ayant pas été représenté).

### EXPOSÉ DÉTAILLÉ DE MODES DE RÉALISATION PRÉFÉRÉS

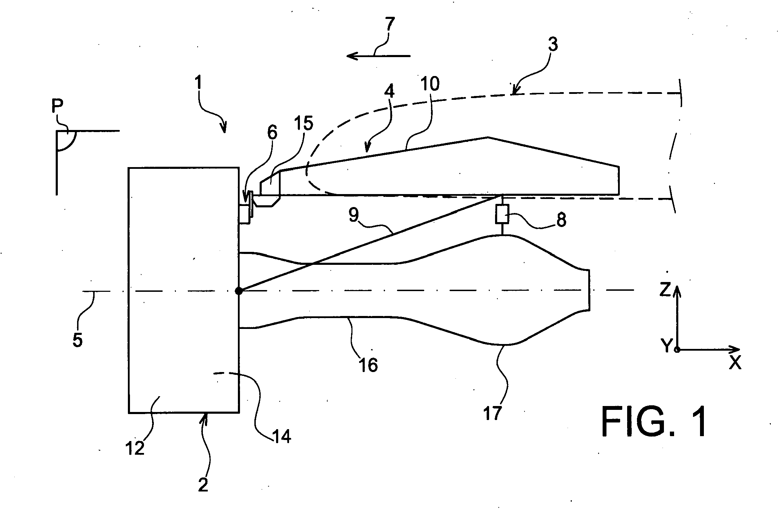

En référence à la figure 1, on voit un ensemble moteur 1 pour aéronef destiné à être fixé sous une aile de cet aéronef (représentée uniquement schématiquement et portant la référence numérique 3), cet ensemble 1 se présentant sous la forme d'un mode de réalisation préféré de la présente invention.

Globalement, l'ensemble moteur 1 est composé d'un moteur tel qu'un turboréacteur 2, d'un mât d'accrochage 4, et d'une pluralité d'attaches moteur 6, 8, 9 interposées entre une structure rigide 10 du mât 4 et le turboréacteur 2. A titre indicatif, il est noté que l'ensemble 1 est destiné à être entouré d'une nacelle (non représentée), et que le mât d'accrochage 4 est équipé d'une autre série d'attaches (non représentées) permettant d'assurer la suspension de cet ensemble 1 sous la voilure de l'aéronef.

Dans toute la description qui va suivre, par convention, on appelle X la direction longitudinale du mât 4 qui est également assimilable à la direction longitudinale du turboréacteur 2, cette direction X étant parallèle à un axe longitudinal 5 de ce turboréacteur 2. D'autre part, on appelle Y la direction orientée transversalement par rapport au mât 4 et également assimilable à la direction transversale du turboréacteur 2, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 2, cette direction étant représentée schématiquement par la flèche 7.

Sur la figure 1, on peut voir que les attaches moteur 6, 8, 9 ont été représentées schématiquement, et que seule la structure rigide 10 du mât d'accrochage 4 a été représentée. Les autres éléments constitutifs non représentés de ce mât 4, tels que les moyens d'accrochage de la structure rigide 10 sous la voilure de l'aéronef, ou encore la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

Par ailleurs, la structure rigide 10 du mât 4 permettant d'assurer la transmission des efforts est également de conception connue, car elle prend de préférence la forme d'un « caisson » formé par l'assemblage de longerons et de panneaux latéraux raccordés entre eux par l'intermédiaire de nervures transversales. Au niveau d'une partie avant de cette structure rigide 10, on peut apercevoir une extrémité prenant la forme d'une ferrure 15 sur laquelle vient se fixer l'attache moteur 6.

D'autre part, le turboréacteur 2 dispose à l'avant d'un carter de soufflante 12 de grande dimension délimitant un canal annulaire de soufflante 14, et comporte vers l'arrière un carter central 16 de plus petite dimension, renfermant le coeur de ce turboréacteur. Enfin, le carter central 16 se prolonge vers l'arrière par un carter d'éjection 17 de plus grande dimension que celle du carter 16. Les carters 12, 16 et 17 sont bien entendu solidaires les uns des autres.

Comme on peut l'apercevoir sur la figure 1, la pluralité d'attaches moteur est constituée par une attache moteur avant 6 formant en réalité deux demi-attaches avant, une attache moteur arrière 8, ainsi qu'une attache 9 formant un dispositif de reprise des efforts de poussée générés par le turbomoteur 2. Comme cela est montré schématiquement sur le figure 1, ce dispositif 9 prend par exemple la forme de deux bielles latérales (une seule étant visible en raison de la vue de côté) raccordées d'une part à une partie arrière du carter de soufflante 12, et d'autre part à l'attache arrière 8.

Cette attache moteur arrière 8 est conçue classiquement de manière à pouvoir reprendre uniquement des efforts générés par le turboréacteur 2 selon la direction Y et selon la direction Z, et donc pas ceux s'exerçant selon la direction X. Elle est interposée entre le carter d'éjection 17 et un longeron inférieur de la structure rigide 10 du mât.

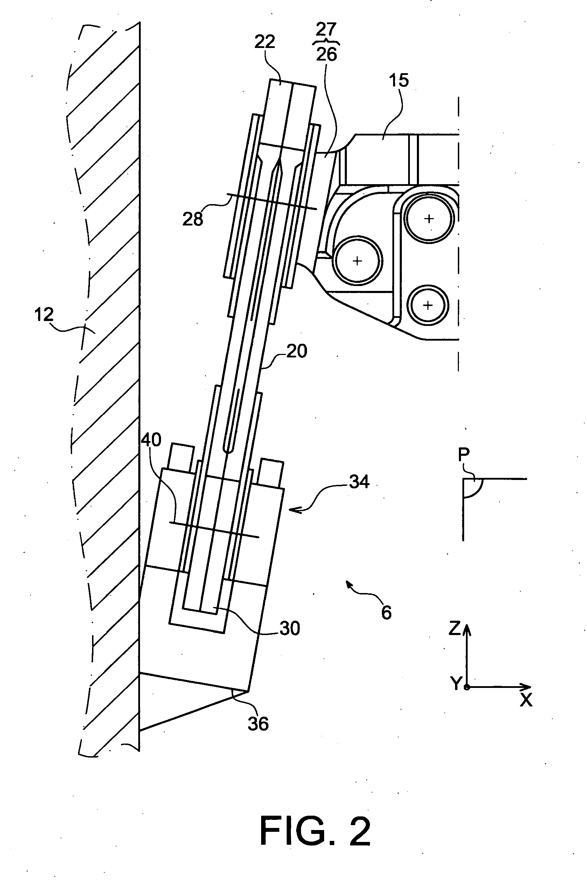

En revanche, l'attache moteur avant 6, solidarisée à la ferrure 15 et au carter de soufflante 12, constitue une des particularités de l'invention et sera plus amplement détaillée en référence aux figures 2 à 4. A titre indicatif, cette attache avant 6 pénètre de préférence dans une portion interne du carter de soufflante qui porte des pales fixes de ce dernier, et étant située à proximité d'une extrémité avant du carter central. Elle est quant à elle conçue pour former deux demi-attaches disposées de façon symétrique par rapport à un plan P défini par l'axe 5 et la direction Z, la conception de cette attache 6 étant telle qu'elle puisse reprendre des efforts générés par le turboréacteur 2 selon la direction Y et selon la direction Z, mais pas ceux s'exerçant selon la direction X.

De cette manière, la reprise des efforts s'exerçant selon la direction X s'effectue à l'aide de l'attache 9, la reprise des efforts s'exerçant selon la direction Y s'effectue à l'aide l'attache avant 6 et de l'attache arrière 8, et la reprise des efforts s'exerçant selon la direction Z s'effectue aussi conjointement à l'aide des attaches 6 et 8.

D'autre part, la reprise du moment s'exerçant selon les directions Y et Z s'effectue respectivement verticalement et transversalement à l'aide des deux attaches 6 et 8, tandis que la reprise du moment s'exerçant selon la direction X s'effectue exclusivement à l'aide de l'attache arrière 8 qui peut également présenter une conception du type à deux demi-attaches.

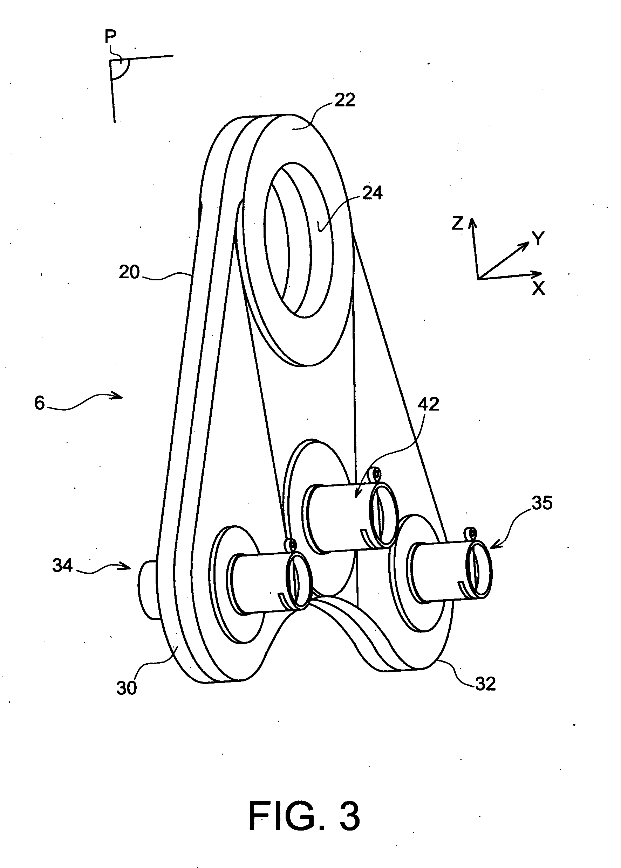

En référence à présent conjointement aux figures 2 et 3, on peut apercevoir que l'attache 6 comporte une manille triangulaire 20, de préférence double, cette manille traversée symétriquement par le plan P disposant d'un sommet 22 orienté vers le haut.

Au niveau de ce sommet 22, il est prévu un orifice traversant 24 dans lequel vient se loger un pion dé liaison 26 solidarisé à la ferrure 15 du mât d'accrochage. De préférence, une rotule (non représentée) est logée dans l'orifice 24 pour recevoir le pion 26. Ainsi, la rotule ainsi que le pion de liaison 26 constituent conjointement un dispositif de fixation 27 de la manille 20 sur la structure rigide du mât.

Comme cela est le mieux visible sur la figure 2, la manille 20 est globalement agencée dans un plan parallèle à la direction Y et incliné de manière à s'écarter d'un carter de soufflante 12 en allant vers l'arrière. Par conséquent, l'axe 28 de l'orifice 24 confondu avec celui du pion 26 est légèrement incliné par rapport à la direction X, dans un plan XZ, de façon à s'élever en allant vers l'avant.

Une autre conséquence de l'inclinaison de cette manille 20 est que la partie supérieure de celle-ci, donc son sommet 22, est plus éloignée du carter de soufflante 12 que la partie inférieure de cette manille triangulaire 20 intégrant ses deux autres sommets 30, 32.

Ces deux sommets inférieurs 30, 32 rapprochés du carter de soufflante 12 sont chacun pourvu d'un orifice traversant (non visible) coopérant respectivement avec un premier dispositif de fixation 34 et un second dispositif de fixation 35 de conception identique, ces dispositifs comportant chacun une chape solidaire du carter de soufflante 12 (seule la chape 36 du premier dispositif de fixation 34 étant visible sur la figure 2). Bien entendu, dans cette configuration où les deux chapes sont donc disposées symétriquement par rapport au plan P et rapportées solidairement sur la portion interne du carter de soufflante portant les pales fixes de ce dernier, les axes 40 des deux orifices traversants associés aux sommets 30, 32 sont parallèles à l'axe 28, et donc également légèrement incliné par rapport à la direction X, dans un plan XZ, de façon à s'élever en allant vers l'avant.

A titre indicatif, il est précisé que la manille 20 est également pourvue d'un quatrième point d'attache équipé d'un système de fixation de sécurité 42 monté sur le carter de soufflante. Ce quatrième point d'attache, également appelé point d'attache « Fail Safe », transmet des efforts vers la structure rigide du mât uniquement en cas de défaillance de l'un des deux autres points d'attache situés au niveau des sommets 30, 32.

Par ailleurs, il est bien entendu à comprendre que c'est la disposition particulière et symétrique de ces deux points d'attaches inférieurs, incorporant respectivement le premier et le second dispositif de fixation 34, 35, qui permet d'obtenir les deux demi-attaches moteur avant précitées.

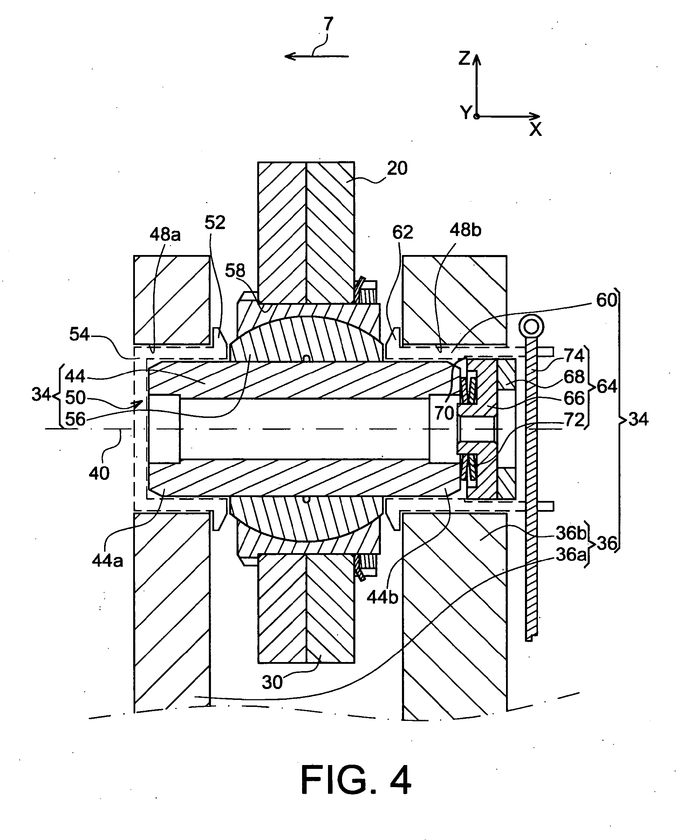

A présent en référence à la figure 4, il va être décrit le point d'attache inférieur incorporant le premier dispositif de fixation 34, c'est-à-dire celui situé au niveau du sommet 30. L'autre point d'attache inférieur étant sensiblement identique, il ne sera par conséquent pas davantage décrit.

Globalement, le dispositif de fixation 34 comprend la chape 36, dite chape femelle et étant formée par un bras avant 36a et un bras arrière 36b entre lesquels vient se loger le sommet inférieur 30 de la manille 20, ainsi qu'un axe 44 dit axe de liaison et traversant cette manille 20 ainsi que les deux bras 36a, 36b. A ce titre, il est indiqué que l'axe de liaison 44 agencé selon l'axe 40 ne traverse pas nécessairement les bras 36a, 36b de part en part, mais pénètre au moins partiellement dans chacun de ces derniers.

En ce qui concerne le bras avant 36a, celui-ci est pourvu d'un orifice traversant 48a orienté selon l'axe 40 dans lequel est montée une première bague 50. Celle-ci comporte un épaulement 52 en appui contre une surface interne du bras 36a, et permettant de l'arrêter en translation vers l'avant. En outre, l'une des particularités de l'invention réside dans le fait que cette bague 50 recevant l'axe 44 est équipée d'un fond 54 la rendant borgne, ce fond 54 étant situé au niveau d'une extrémité avant de cette bague 50.

La bague 50 appartenant au premier dispositif de fixation 34 permet donc, par l'intermédiaire de son fond 54, de former une butée pour une première extrémité ou extrémité avant 44a de l'axe 44, dans la mesure où il est préférentiellement recherché un contact direct entre cette extrémité 44a et le fond 54 orienté perpendiculairement à l'axe 40.

La partie centrale de l'axe de liaison 44 est de préférence agencée de manière à traverser une rotule 56 appartenant également au premier dispositif de fixation 34, et étant logée à l'intérieur de l'orifice traversant 58 pratiqué au niveau du sommet 30 de la manille triangulaire 20.

Le premier dispositif de fixation 34 comporte en outre une seconde bague 60 logée dans un orifice traversant 48b du bras arrière 36b, cet orifice 48b étant orienté selon l'axe 40. La bague 60 présente un épaulement 62 en appui contre une surface interne du bras 36b, et permettant de l'arrêter en translation vers l'arrière. Par conséquent, les deux bagues 50, 60 se montent chacune sur la chape 36 en les insérant dans leurs orifices respectifs depuis l'espace défini entre les deux bras 36a, 36b.

En position montée, l'axe de liaison 44 pénètre dans la bague 60, où sa deuxième extrémité ou extrémité arrière 44b y est retenue vers l'arrière par l'intermédiaire de moyens d'arrêt en translation 64, appartenant aussi au dispositif 34.

Plus précisément, les moyens d'arrêt en translation 64 comportent un écrou 66 et un contre-écrou 68 centrés sur l'axe 40 et vissés intérieurement dans la seconde bague 60 depuis une extrémité libre de celle-ci, l'écrou 66 étant en appui contre un épaulement intérieur 70 de cette bague 60. Cependant, l'attache est conçue de sorte que l'extrémité arrière 44b de l'axe 44 se situe en avant par rapport à l'épaulement 70, de manière à éviter un contact entre cette extrémité 44b et l'écrou 66, susceptible d'entacher la durabilité des bagues 50, 60. Ainsi, les moyens d'arrêt en translation 64 sont également pourvus d'une rondelle-ressort 72, ou plusieurs, d'une part en appui contre l'écrou 66 et d'autre part en appui contre la seconde extrémité 44b de l'axe de liaison 44. Avec un tel agencement, la force de serrage axiale de l'axe 44 est totalement maîtrisée, de même que les niveaux de contrainte des bagues 50, 60.

Enfin, il est précisé que les moyens d'arrêt en translation 64 comportent aussi une tige de sécurité 74 traversant transversalement la seconde bague 60, de préférence diamétralement, cette tige 74 du type « Fail Safe » étant agencée au niveau de l'extrémité libre arrière de cette seconde bague 60, en arrière par rapport au contre-écrou 68. Naturellement, la tige 74 permet en cas d'une défaillance quelconque des moyens d'arrêt en translation 64, d'éviter l'extraction de l'écrou 66, du contre-écrou 68 et de l'axe 44 en dehors de la bague arrière 60.

Bien entendu, diverses modifications peuvent être apportées par l'homme du métier à l'attache moteur et à l'ensemble moteur pour aéronef qui viennent d'être décrits, uniquement à titre d'exemples non limitatifs. A cet égard, il est par exemple noté que l'attache moteur avant pourrait comporter une manille de forme classique à deux extrémités opposées, au lieu de présenter une forme triangulaire. Dans un tel cas, l'une ou ses deux extrémités pourraient alors être équipées d'un dispositif de fixation à bague borgne tel que celui qui vient d'être décrit.

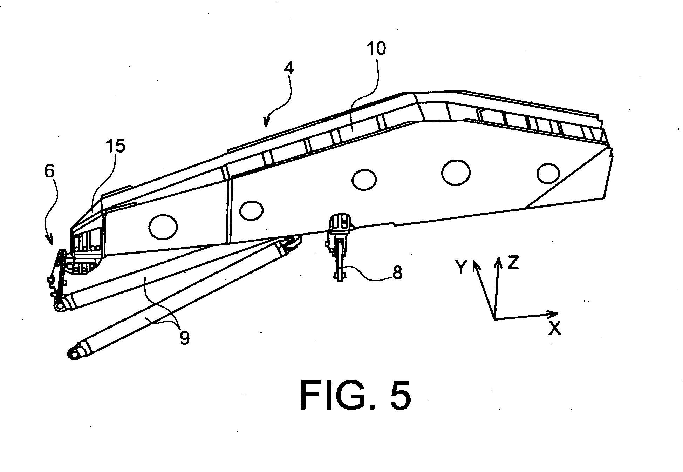

Par ailleurs, l'invention peut également être appliquée dans une configuration où les extrémités arrière des bielles 9 sont articulées sur un palonnier non plus rapporté sur le corps de l'attache moteur arrière 8, mais monté en avant par rapport à ce dernier et en arrière par rapport à l'attache moteur avant 6, toujours préférentiellement sur un longeron inférieur de la structure rigide 10, comme cela est visible sur la figure 5 représentant un autre mode de réalisation de la présente invention.

## Revendications

1. Attache moteur (6) pour aéronef destinée à être interposée entre un moteur (2) et un mât d'accrochage (4) de ce moteur, ladite attache comprenant une manille (20) raccordée à un premier dispositif de fixation (34) comportant une chape (36) pourvue de deux bras (36a, 36b) et un axe (44) traversant ladite manille (20) ainsi que lesdits deux bras (36a, 36b), ces deux derniers disposant chacun d'un orifice (48a, 48b) équipé respectivement d'une première bague (50) ainsi que d'une seconde bague (60) de réception de l'axe, **caractérisée en ce que** ladite première bague (50) est équipée d'un fond (54) formant butée pour une première extrémité (44a) dudit axe (44), et **en ce que** le premier dispositif de fixation (34) comporte en outre des moyens d'arrêt en translation de l'axe (64) coopérant avec une seconde extrémité (44b) de cet axe (44).

2. Attache moteur (6) selon la revendication 1, **caractérisée en ce que** lesdits moyens d'arrêt en translation de l'axe (64) sont montés sur ladite seconde bague (60).

3. Attache moteur (6) selon la revendication 1 ou la revendication 2, **caractérisée en ce que** lesdits moyens d'arrêt en translation de l'axe (64) comportent un écrou (66) et un contre-écrou (68) vissés sur ladite seconde bague (60).

4. Attache moteur (6) selon la revendication 3, **caractérisée en ce que** lesdits moyens d'arrêt en translation de l'axe (64) comportent en outre au moins une rondelle-ressort (72) en appui contre ledit écrou (66) ainsi que contre ladite seconde extrémité (44b).

5. Attache moteur (6) selon la revendication 4, **caractérisée en ce que** l'écrou (66) est en appui contre un épaulement (70) pratiqué dans ladite seconde bague (60).

6. Attache moteur (6) selon la revendication 5, **caractérisée en ce que** lesdits moyens d'arrêt en translation (64) comportent en outre une tige de sécurité (74) traversant transversalement ladite seconde bague (60).

7. Attache moteur (6) selon l'une quelconque des revendications précédentes, **caractérisée en ce qu'**une rotule (56) est interposée entre ledit axe (44) et ladite manille (20).

8. Attache moteur (6) selon l'une quelconque des revendications précédentes, **caractérisée en ce que** ladite manille (20) est triangulaire.

9. Attache moteur (6) selon la revendication 8, **caractérisée en ce que** ladite manille triangulaire (20) est également raccordée à un second dispositif de fixation (35) identique audit premier dispositif de fixation (34), lesdits deux dispositifs de fixation étant respectivement situés à proximité de deux sommets (30, 32) de ladite manille triangulaire (20).

10. Attache moteur (6) selon la revendication 9, **caractérisée en ce qu'**elle forme deux demi-attaches chacune conçue de manière à reprendre les efforts s'exerçant selon une direction transversale (Y) ainsi que selon une direction verticale (Z) du moteur (2).

11. Attache moteur (6) selon la revendication 10, **caractérisée en ce qu'**elle comporte un troisième dispositif de fixation (27) situé à proximité d'un troisième sommet (22) de ladite manille triangulaire (20), ledit troisième dispositif de fixation (27) étant destiné à être solidarisé au mât d'accrochage (4).

12. Ensemble (1) pour aéronef comprenant un moteur (2), un mât d'accrochage (4) ainsi qu'une pluralité d'attaches moteur (6, 8, 9) interposées entre ledit mât d'accrochage (4) et le moteur (2), **caractérisé en ce que** ladite pluralité d'attaches moteur comprend au moins une attache moteur (6) selon l'une quelconque des revendications précédentes.

13. Ensemble (1) selon la revendication 12, **caractérisé en ce qu'**il comporte une attache avant (6) selon l'une quelconque des revendications 1 à 11.

14. Ensemble (1) selon la revendication 13, **caractérisé en ce que** ladite manille (20) est parallèle à une direction transversale (Y) du moteur (2), et inclinée de façon à s'écarter d'un carter de soufflante (12) du moteur (2) en allant vers l'arrière.

15. Ensemble (1) selon la revendication 14, **caractérisé en ce que** la chape (36) de chacun des deux premiers dispositifs de fixation (34, 35) est montée solidairement sur le moteur (2), de façon symétrique par rapport à un plan vertical (P) passant par un axe longitudinal (5) de ce moteur.

## Claims

1. Aircraft engine attachment (6) designed to be inserted between an engine (2) and an EMS (4) for this engine, said attachment comprising a clevis (20) connected to a first fixing device (34) comprising an end fitting (36) provided with two arms (36a, 36b) and a pin (44) passing through said clevis (20) and said two arms (36a, 36b), in each of which an orifice (48a, 48b) is formed equipped with a first ring (50) and a second ring (60) respectively holding the pin, **characterised in that** said first ring (50) is provided with a bottom (54) acting as a stop for a first end (44a) of said pin (44), and **in that** the first attachment device (34) also comprises means (64) of stopping the pin in translation, cooperating with a second end (44b) of this pin.

2. Engine attachment (6) according to claim 1, **characterised in that** said pin translation stop means (64) are installed on said second ring (60).

3. Engine attachment (6) according to claim 1 or claim 2, **characterised in that** said pin translation stop means (64) comprise a nut (66) and a locking nut (68) screwed onto said second ring (60).

4. Engine attachment (6) according to claim 3, **characterised in that** said pin translation stop means (64) also comprise at least one spring-washer (72) bearing in contact with the nut (66) and in contact with said second end (44b).

5. Engine attachment (6) according to claim 4, **characterised in that** the nut (66) is bearing in contact with a shoulder (70) formed in said second ring (60).

6. Engine attachment (6) according to claim 5, **characterised in that** said translation stop means (64) also comprise a safety rod (74) passing transversely through said second ring (60).

7. Engine attachment (6) according to any one of previous claims, **characterised in that** a ball joint (56) is inserted between said pin (44) and said clevis (20).

8. Engine attachment (6) according to any one of the previous claims, **characterised in that** said clevis (20) is triangular.

9. Engine attachment (6) according to claim 8, **characterised in that** said triangular clevis (20) is also connected to a second fixing device (35) identical to the first fixing device (34), said two fixing devices being located close to the two vertices (30, 32) of said triangular clevis (30).

10. Engine attachment (6) according to claim 9, **characterised in that** it forms two half-attachments each designed to resist the forces applied along a transverse direction (Y) and along a vertical direction (Z) of the engine (2).

11. Engine attachment (6) according to claim 10, **characterised in that** it comprises a third fixing device (27) close to a third vertex (22) of said triangular clevis (20), said third fixing device (27) then being designed to be rigidly fixed to the EMS (4).

12. Assembly (1) for an aircraft comprising an engine (2), an EMS (4) and a plurality of engine attachments (6, 8, 9) inserted between said EMS (4) and the engine (2), **characterised in that** said plurality of engine attachments comprises at least one engine attachment (6) according to any one of previous claims.

13. Assembly (1) according to claim 12, **characterised in that** it comprises a forward attachment (6) according to any one of claims 1 to 11.

14. Assembly (1) according to claim 13, **characterised in that** said clevis (20) is parallel to a transverse direction (Y) of the engine (2), and inclined such that the distance from the fan casing (12) of the engine (2) increases in the aft direction.

15. Assembly (1) according to claim 14, **characterised in that** the end fitting (36) on each of the first two fixing devices (34, 35) is rigidly fixed onto the engine (2), symmetrically about a vertical plane (P) passing through a longitudinal axis (5) of this engine.

## Patentansprüche

1. Triebwerkaufhängung (6) für ein Flugzeug zum Einfügen zwischen einem Triebwerk (2) und einem Aufhängemast(4) dieses Triebwerks, wobei die Aufhängung einen Schwingarm bzw. Schäkel(20) umfasst, der mit einer ersten Befestigungsvorrichtung (34) verbunden ist, die eine mit zwei Armen (36a, 36b) ausgestattete Buchse bzw. Gabelkopf (36) und eine Achse (44), die durch den Schwingarm (20) sowie die zwei Arme (36a, 36b) geht, umfasst, wobei die zwei letzteren jeweils eine Öffnung (48a, 48b) aufweisen, die mit einem ersten Ring (50) bzw. einem zweiten Ring (60) zur Aufnahme der Achse ausgestattet sind, **dadurch gekennzeichnet, dass** der erste Ring (50) mit einem Ende (54) ausgestattet ist, das einen Anschlag für ein erstes Ende (44a) der Achse (44) bildet, und dass die erste Befestigungsvorrichtung (34) ferner Mittel zum Stoppen einer Translation der Achse (64), die mit einem zweiten Ende (44b) dieser Achse (44) zusammenwirken, umfasst.

2. Triebwerkaufhängung (6) nach Anspruch 1, **dadurch gekennzeichnet, dass** die Mittel zum Stoppen einer Translation der Achse (64) an dem zweiten Ring (60) angebracht sind.

3. Triebwerkaufhängung (6) nach Anspruch 1 oder Anspruch 2, **dadurch gekennzeichnet, dass** die Mittel zum Stoppen einer Translation der Achse (64) eine Mutter (66) und eine Gegenmutter (68) umfassen, die an dem zweiten Ring (60) verschraubt sind.

4. Triebwerkaufhängung (6) nach Anspruch 3, **dadurch gekennzeichnet, dass** die Mittel zum Stoppen einer Translation der Achse (64) ferner mindestens eine Scheibenfeder (72) umfassen, die gegen die Mutter (66) sowie gegen das zweite Ende (44b) gestützt ist.

5. Triebwerkaufhängung (6) nach Anspruch 4, **dadurch gekennzeichnet, dass** die Mutter (66) gegen einen in dem zweiten Ring (60) geformten Schulterabsatz (70) gestützt ist.

6. Triebwerkaufhängung (6) nach Anspruch 5, **dadurch gekennzeichnet, dass** die Mittel zum Stoppen einer Translation (64) ferner einen Sicherungsstift (74) umfassen, der quer durch den zweiten Ring (60) geht.

7. Triebwerkaufhängung (6) nach einem der vorhergehenden Ansprüche, **dadurch gekennzeichnet, dass** ein Kugelgelenk (56) zwischen der Achse (44) und dem Schwingarm (20) angebracht ist.

8. Triebwerkaufhängung (6) nach einem der vorhergehenden Ansprüche, **dadurch gekennzeichnet, dass** der Schwingarm (20) dreieckig ist.

9. Triebwerkaufhängung (6) nach Anspruch 8, **dadurch gekennzeichnet, dass** der dreieckige Schwingarm (20) auch mit einer zweiten Befestigungsvorrichtung (35), die zur ersten Befestigungsvorrichtung (34) identisch ist, verbunden ist, wobei sich die zwei Befestigungsvorrichtungen jeweils nahe den zwei Spitzen (30,32) des dreieckigen Schwingarms (20) befinden.

10. Triebwerkaufhängung (6) nach Anspruch 9, **dadurch gekennzeichnet, dass** sie zwei Halbaufhängungen umfasst, die jeweils derart gestaltet sind, dass sie die in einer Querrichtung (Y) sowie einer Vertikalenrichtung (Z) des Motors (2) auftretenden Kräfte aufnehmen.

11. Triebwerkaufhängung (6) nach Anspruch 10, **dadurch gekennzeichnet, dass** sie eine dritte Befestigungsvorrichtung (27) umfasst, die sich nahe einer dritten Spitze (22) des dreieckigen Schwingarms (20) befindet, wobei die dritte Befestigungsvorrichtung (27) mit dem Aufhängemast (4) kraftschlüssig verbunden sein soll.

12. Anordnung (1) für ein Flugzeug, die ein Triebwerk (2), einem Aufhängemast (4) sowie mehrere Triebwerkaufhängungen (6, 8, 9), die zwischen dem Aufhängemast (4) und dem Triebwerk (2) eingefügt sind, umfasst, **dadurch gekennzeichnet, dass** die mehreren Triebwerkaufhängungen mindestens eine Triebwerkaufhängung (6) nach einem der vorhergehenden Ansprüche umfassen.

13. Anordnung (1) nach Anspruch 12, **dadurch gekennzeichnet, dass** sie eine vordere Aufhängung (6) nach einem der Ansprüche 1 bis 11 umfasst.

14. Anordnung (1) nach Anspruch 13, **dadurch gekennzeichnet, dass** der Schwingarm (20) parallel zu einer Querrichtung (Y) des Motors (2) ist und derart geneigt ist, dass er sich vom Gebläsegehäuse (12) des Triebwerks (2) nach hinten gehend entfernt.

15. Anordnung (1) nach Anspruch 14, **dadurch gekennzeichnet, dass** die Buchse (36) von jeder der zwei ersten Befestigungsvorrichtungen (34, 35) symmetrisch in Bezug auf eine durch eine Längsachse (5) dieses Triebwerks laufende vertikale Ebene (P) an dem Triebwerk (2) kraftschlüssig angebracht ist.
